# FASCICULE DE BREVET EUROPEEN

(11) **EP 1 805 050 B1**
(45) Date de publication et mention de la délivrance du brevet: **29.04.2009**
(21) Numéro de dépôt: 05798457.7
(22) Date de dépôt: 26.08.2005
(51) Int. Cl.: B60J 7/20, B60J 7/14, B60J 5/10, B60R 21/13

(54) **VEHICULE A TOIT ESCAMOTABLE ET A HAYON ARRIERE**
FAHRZEUG MIT EINEM CABRIOLET-VERDECK UND EINER HECKKLAPPE
VEHICLE WITH A CONVERTIBLE ROOF AND A HATCHBACK

(30) Priorité: 27.10.2004 FR 0452464
(43) Date de publication de la demande: 11.07.2007
(73) Titulaire: Heuliez, 79140 Cerizay (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirieres (FR)
(74) Mandataire: Novagraaf IP
(86) Numéro de dépôt international: PCT/FR2005/002154
(87) Numéro de publication internationale: WO 2006/045908

(56) Documents cités:
- EP-A- 0 845 378
- EP-A- 0 949 104
- EP-A- 0 956 990
- DE-A1- 2 723 996
- DE-A1- 10 162 153
- DE-A1- 10 355 332
- FR-A- 2 814 402
- FR-A- 2 840 582
- US-A- 3 575 464

## Description

La présente invention concerne un véhicule à toit escamotable et à hayon arrière, et plus particulièrement un tel véhicule dans lequel le toit comprend au moins un élément de toit avant rigide et un élément de toit arrière rigide, ces éléments avant et arrière étant déplaçables entre une position déployée dans laquelle ces éléments s'étendent au-dessus de l'habitacle du véhicule pour former un toit possédant un bord avant et un bord arrière, et une position rangée dans laquelle ces éléments sont repliés dans un espace arrière de rangement du véhicule, le hayon comprenant un premier bord sensiblement parallèle et à proximité du bord arrière du toit et un deuxième bord sensiblement parallèle et opposé audit premier bord.

On connaît par le document FR-A-2814402 un agencement de ce type, appliqué toutefois à un véhicule de type "pick-up" et non pas à un véhicule à hayon arrière. Le document DE 103 55 332 divulgue un véhicule avec les caractéristiques du préambule de la revendication 1.

La présente invention vise à fournir un véhicule à hayon arrière muni d'un toit escamotable qui soit simple et facile à utiliser.

A cet effet, l'invention a pour objet un véhicule à toit escamotable et à hayon arrière, le toit comprenant au moins un élément de toit avant rigide et un élément de toit arrière rigide, ces éléments avant et arrière étant déplaçables entre une position déployée dans laquelle ces éléments s'étendent au-dessus de l'habitacle du véhicule pour former un toit possédant un bord avant et un bord arrière, et une position rangée dans laquelle ces éléments sont repliés dans un espace arrière de rangement du véhicule, le hayon comprenant un premier bord sensiblement parallèle et à proximité du bord arrière du toit et un deuxième bord sensiblement parallèle et opposé audit premier bord, ce véhicule comprenant un élément de structure possédant une forme générale en U, dont les pieds sont liés fixement au bâti structurel du véhicule et disposé entre le bord arrière du toit et le premier bord du hayon, le premier bord et le deuxième bord du hayon étant articulés de façon libérable respectivement à l'élément de structure et à une partie arrière du bâti structurel du véhicule de sorte que le hayon puisse s'ouvrir de l'avant vers l'arrière en pivotant autour du deuxième bord pour le rangement du toit et de l'arrière vers l'avant autour du premier bord pour accéder à l'espace arrière de rangement.

Dans un mode de réalisation particulier, l'élément de toit arrière est articulé sur le bâti structurel au voisinage de l'élément de structure.

L'élément de toit arrière et le hayon peuvent s'appuyer en position déployée du toit et fermée du hayon sur l'élément de structure.

Également dans un mode de réalisation particulier un dispositif d'étanchéité est disposé entre l'élément de structure et l'élément de toit arrière d'une part et entre l'élément de structure et le hayon d'autre part.

Plus particulièrement, le dispositif d'étanchéité peut être constitué d'un premier joint continu disposé entre l'élément de structure et élément de toit arrière et d'un deuxième joint continu disposé entre un l'élément de structure et le hayon.

Également dans un mode de réalisation particulier, le hayon porte une vitre comportant un premier bord sensiblement parallèle et à proximité du premier bord du hayon et un deuxième bord sensiblement parallèle et opposé audit premier bord, la vitre étant articulée sur le hayon au voisinage de son deuxième bord de sorte qu'en position rangée du toit la vitre peut être rabattue vers un élément du véhicule telle qu'une tablette arrière. En variante, le hayon possède une traverse disposée à sa partie haute, ladite traverse étant conformée en déflecteur ou aileron de sorte à améliorer l'écoulement d'air lorsque le véhicule est en configuration découverte.

L'élément de structure peut posséder une forme générale en U dont les pieds sont intégrés au bâti structurel du véhicule.

Également dans un mode de réalisation particulier, une partie de l'articulation libérable est intégrée et/ou formée avec l'élément de structure.

Plus particulièrement, la partie de l'articulation libérable intégrée et/ou formée avec l'élément de structure peut être un élément d'appui et de guidage de l'articulation libérable.

L'articulation libérable peut en outre comprendre un dispositif de verrouillage, tel qu'un crochet, disposé à l'intérieur de l'élément de structure.

Dans un mode de réalisation particulier de l'invention, l'élément de structure est réalisé sous forme d'arceau de sécurité.

Egalement dans un mode de réalisation particulier, l'élément de toit avant est fixé de façon articulée à l'élément de toit arrière suivant un premier axe, l'élément arrière étant fixé de façon articulée à la carrosserie suivant un deuxième axe proche du bord arrière inférieur de cet élément arrière, un bras étant articulé à l'élément avant suivant un troisième axe situé en avant du premier axe, le bras étant articulé à la carrosserie suivant un quatrième axe situé en avant du deuxième axe, les quatre axes précités définissant un quadrilatère déformable.

Plus particulièrement, l'élément de toit arrière peut comprendre un panneau central bordé de part et d'autre d'éléments latéraux portant le premier et le deuxième axe, le panneau central étant déplaçable en rotation autour d'un axe avec le toit entre la position déployée et la position rangée, position dans laquelle des moyens de pivotement placent, lors du mouvement de rangement du toit, le panneau central juste en dessous de l'élément de toit avant. Une telle disposition en position rangée permet d'obtenir un gain de hauteur de chargement dans le coffre.

On décrira maintenant, à titre d'exemple non limitatif, un mode de réalisation particulier de l'invention, en référence aux dessins schématiques annexés dans lesquels:
- la figure 1 est une vue en perspective d'une partie d'un véhicule selon l'invention ;
- la figure 2 en est une vue de côté illustrant les mouvements du hayon;
- la figure 3 en est également une vue de côté avec le toit et le hayon en position fermée ;
- la figure 4 est une vue à plus grande échelle, en coupe selon la ligne IV-IV de la figure 3 ; et
- la figure 5 est une vue de côté en coupe selon la ligne V-V de la figure 4, illustrant les moyens de verrouillage du hayon.

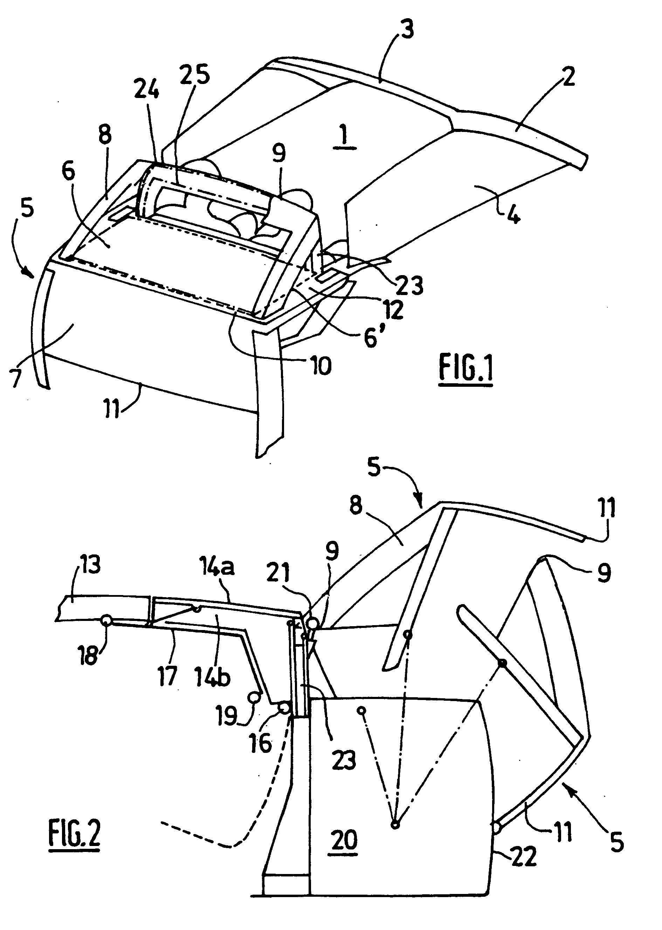

On voit à la figure 1, l'habitacle 1 d'un véhicule selon l'invention, délimité à l'avant par un pare-brise installé sur des montants 2 et une barre horizontale 3 et latéralement par des vitres 4. L'arrière du véhicule est fermé par un hayon 5.

Le hayon 5 comporte une vitre 6 à sa partie supérieure et un élément de carrosserie 7 à sa partie inférieure. La vitre 6 est installée entre deux montants latéraux 8 et un élément horizontal 9 formant un premier bord du hayon 5, en partie supérieure lorsque le hayon est en position fermée. En outre, les custodes du hayon peuvent être équipées de vitres latérales.

La vitre 6 et l'élément de carrosserie 7 ont un bord commun 10, généralement parallèle à l'élément 9 et un deuxième bord 11 du hayon est formé du bord de l'élément de carrosserie 7 opposé au bord 10. Le deuxième bord 11 du hayon, sensiblement parallèle au bord de l'élément 9, est situé en partie basse du hayon lorsque ce dernier est fermé.

On voit par ailleurs sur la figure 1 que la vitre 6 peut être rabattue en 6' sensiblement horizontalement contre un élément de carrosserie 12 formant une tablette arrière de l'habitacle 1.

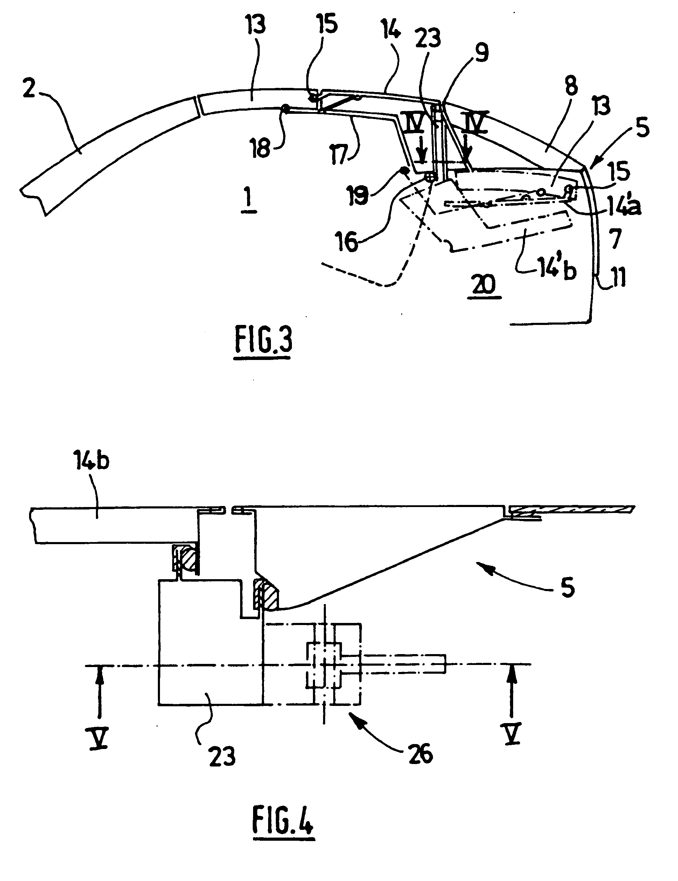

On voit aux figures 2 et 3 que le toit du véhicule est composé d'un élément avant 13 et d'un élément arrière 14, l'élément arrière 14 comprenant un panneau central 14a bordé de part et d'autre d'éléments latéraux 14b.

L'élément avant 13 est monté pivotant par rapport à l'élément latéral 14b autour d'un premier axe transversal (non représenté) solidaire de l'élément 14b.

L'élément central 14a est monté pivotant par rapport à l'élément avant 13 autour d'un axe transversal 15. L'axe 15 est situé à proximité du bord arrière de l'élément de toit avant 13 et du bord avant de l'élément de toit arrière 14a.

L'élément latéral 14b est lui-même monté pivotant par rapport au châssis du véhicule autour d'un deuxième axe transversal 16 solidaire de ce châssis. L'axe 16 est situé à l'arrière et en bas de l'élément 14b.

Un bras 17 est articulé à sa partie avant autour d'un troisième axe transversal 18 solidaire de l'élément de toit avant 13 et à sa partie arrière autour d'un quatrième axe transversal 19 monté sur le châssis du véhicule. Ainsi, les axes 16 18 et 19 forment, avec le premier axe de rotation, un quadrilatère déformable. Lorsque l'élément de toit arrière 14 est entraîné par tout moyen convenable en rotation autour de l'axe 16, cet élément 14 et l'élément 13 viennent ainsi se ranger dans le compartiment à bagages 20 du véhicule, comme représenté en 13' et 14b'. En particulier, le document FR-2 814 402 décrit un tel toit rétractable ainsi que différents modes de réalisation de celui-ci qui peuvent être utilisés en tant qu'agencement du toit pour un véhicule selon la présente invention.

En outre, comme représenté sur la figure 3 en trait mixte, le panneau central 14a est déplaçable avec l'élément 14b entre la position déployée et la position rangée, position dans laquelle des moyens de pivotement placent, lors du mouvement de rangement du toit, le panneau central 14a' juste en dessous de l'élément de toit avant 13'.

On voit à la figure 2 que le hayon 5 est articulé de façon libérable d'une part autour d'un axe transversal 21 situé à proximité de son premier bord 9 et d'autre part autour d'un autre axe transversal 22 situé à proximité de son deuxième bord 11. Ainsi, le hayon peut s'ouvrir de l'arrière vers l'avant par pivotement autour de l'axe 21 pour donner accès au compartiment à bagages 20, ou de l'avant vers l'arrière autour de l'axe 22 pour permettre le passage du toit de sa position déployée où il recouvre l'habitacle 1 comme montré en trait plein à la figure 3 à sa position rangée dans le compartiment 20 comme représenté en trait mixte à cette même figure 3.

Le véhicule comprend suivant l'invention par ailleurs un élément de structure 23 en U renversé formant ici un arceau de sécurité. Cet élément 23 est fixé par l'extrémité de ses branches latérales au châssis du véhicule et est disposé entre l'arrière de l'élément de toit arrière 14 et le premier bord 9 du hayon 5. On voit par ailleurs que l'axe de rotation 16 précité est disposé à proximité de l'extrémité des branches de l'élément 23.

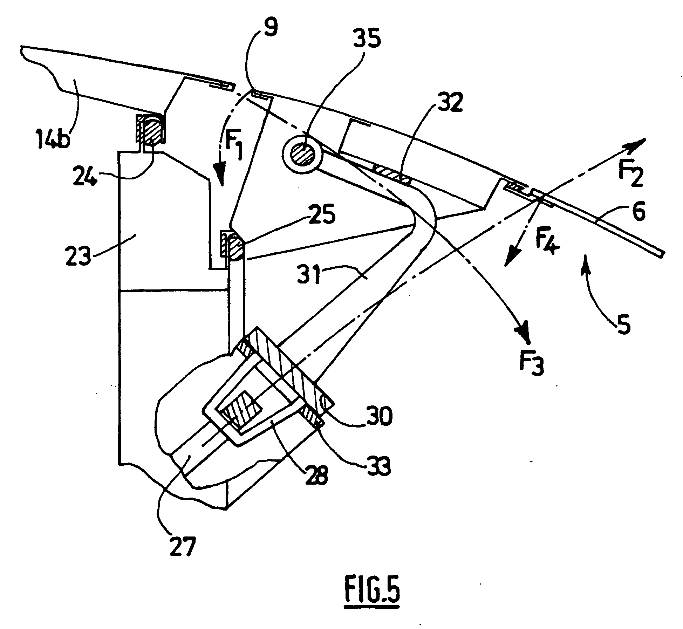

On voit aux figures 4 et 5 qu'en position fermée, l'élément de toit arrière 14 et le hayon 5 s'appuient sur l'élément de structure 23. Cet appui est réalisé, en ce qui concerne l'élément de toit 14, par l'intermédiaire d'un joint d'étanchéité 24 s'étendant tout le long de l'élément 23 à proximité du bord arrière de l'élément 14. En ce qui concerne le hayon 5, l'appui s'effectue par l'intermédiaire d'un joint d'étanchéité 25 s'étendant tout le long de l'élément 23 à proximité du bord 9 du hayon. En variante, on peut prévoir des butées de sorte à éviter un écrasement trop important des joints 24, 25.

On voit à la figure 4 l'articulation libérable 26 du hayon formé avec l'élément de structure 23. Un crochet 27 (figure 5) intérieur à l'élément de structure 23, coopère avec un anneau 28 pour verrouiller le hayon en position fermée.

Sur la figure 5:
- la flèche F1 représente la courbe suivie par l'élément horizontal 9 lors de son pivotement de l'arrière vers l'avant autour de l'axe d'articulation 35 de l'articulation libérable 26 ;
- la flèche F2 représente le mouvement de l'anneau 28 de l'articulation libérable 26 lors du pivotement du hayon de l'avant vers l'arrière ;
- la flèche F3 représente le mouvement de l'extrémité arrière de l'élément de toit arrière 14b lors de son mouvement de rangement dans l'espace de rangement arrière ;
- la flèche F4 représente le mouvement de l'extrémité avant de la vitre 6 de hayon lors du basculement vers un élément tel qu'une tablette arrière

On décrit ci-dessous, en relation avec la figure 5, le fonctionnement des articulations libérables 26 qui sont disposées en partie haute et basse du hayon. Dans le mode de réalisation représenté, ces articulations sont de même type, elles pourraient toutefois être de type différent entre elles.

Pour ouvrir le hayon de l'arrière vers l'avant, on libère l'anneau 28 de l'articulation libérable disposée en partie basse du hayon puis le hayon pivote autour de l'axe d'articulation de l'articulation libérable située en partie haute. Ce mouvement est commandé par un actionneur tel qu'un vérin hydraulique (comme décrit par exemple dans les documents FR-2 777 241 et FR-2 840 582) dont on peut voir les différentes positions schématiquement représentées par un trait mixte sur la figure 2.

Pour pivoter le hayon de l'avant vers l'arrière, on libère l'anneau 28 de l'articulation libérable située en partie haute du hayon. La platine 30 se désolidarise alors de l'élément de structure et le hayon peut pivoter autour de l'axe d'articulation de l'articulation libérable située dans sa partie basse. Lors de ce mouvement, le bras 31 de l'articulation qui est libéré est maintenu en contact avec une butée 32 grâce a un élément élastique tel qu'un ressort (non représenté).

Lors de la fermeture du hayon, la butée 32 sert à éviter d'endommager la partie de carrosserie du hayon sur laquelle le bras 31 d'articulation vient s'appuyer. La butée 32 sert également à positionner le bras d'articulation 31 dans l'axe de l'anneau 28 et de l'ouverture du support de platine 33. Lorsque l'anneau 28 pénètre dans le support 33, il guide la fin du mouvement jusqu'à ce que la platine 30 vienne en contact avec le support 33. Le guidage peut être amélioré en donnant à l'anneau 28 une forme biseautée comme cela est illustré sur la figure 5.

En variante, les articulations libérables du hayon peuvent être des articulations avec ou sans centre de rotation. Dans ce dernier cas, il peut s'agir par exemple d'articulations du type à biellettes formant quadrilatère déformable.

Le véhicule suivant l'invention présente notamment les avantages suivants :
- disposer de quatre vraies places;
- l'espace sous le hayon permet de disposer d'un grand volume de chargement en position couverte du toit. En position découverte, le basculement de la vitre de hayon vers un élément de carrosserie permet de conférer au véhicule un caractère de cabriolet. Dans cette position, la traverse haute du hayon peut être réalisée sous forme de déflecteur ou d'aileron afin d'améliorer l'écoulement d'air en partie haute du véhicule d'où une réduction du bruit et des turbulences dans l'habitacle ;
- l'élément de structure sur lequel est fixé le hayon permet de renforcer la résistance de l'habitacle. En effet, l'élément de structure étant lié fixement au bâti structurel du véhicule, l'habitacle se trouve renforcé aussi bien en choc latéral qu'en cas de retournement du véhicule. La résistance dans ce dernier cas est particulièrement augmentée si l'on réalise l'élément de structure sous forme d'arceau de sécurité.

## Revendications

1. Véhicule à toit escamotable et à hayon arrière, le toit comprenant au moins un élément de toit avant rigide (13) et un élément de toit arrière rigide (14), ces éléments avant et arrière étant déplaçables entre une position déployée dans laquelle ces éléments s'étendent au-dessus de l'habitacle du véhicule pour former un toit possédant un bord avant et un bord arrière, et une position rangée dans laquelle ces éléments sont repliés dans un espace arrière de rangement du véhicule, le hayon (5) comprenant un premier bord (9) sensiblement parallèle et à proximité du bord arrière du toit et un deuxième bord (11) sensiblement parallèle et opposé audit premier bord, **caractérisé en ce que** le véhicule comprend un élément de structure (23) possédant une forme générale en U, dont les pieds sont intégrés fixement au bâti structurel du véhicule, et disposé entre le bord arrière du toit et le premier bord du hayon, le premier bord et le deuxième bord du hayon étant articulés de façon libérable respectivement à l'élément de structure (23) et à une partie arrière du bâti structurel du véhicule de sorte que le hayon puisse s'ouvrir de l'avant vers l'arrière en pivotant autour du deuxième bord pour le rangement du toit et de l'arrière vers l'avant autour du premier bord pour accéder à l'espace arrière de rangement.

2. Véhicule suivant la revendication 1 **caractérisé en ce que** l'élément de toit arrière est articulé sur le bâti structurel au voisinage de l'élément de structure.

3. Véhicule suivant l'une quelconque des revendications précédentes **caractérisé en ce que** l'élément de toit arrière et le hayon s'appuient en position déployée du toit et fermée du hayon sur l'élément de structure.

4. Véhicule suivant l'une quelconque des revendications précédentes **caractérisé en ce qu'**un dispositif d'étanchéité est disposé entre l'élément de structure et l'élément de toit arrière d'une part et entre l'élément de structure et le hayon d'autre part.

5. Véhicule suivant la revendication 4 **caractérisé en ce que** le dispositif d'étanchéité est constitué d'un premier joint continu (24) disposé entre l'élément de structure et élément de toit arrière et d'un deuxième joint continu (25) disposé entre un l'élément de structure et le hayon.

6. Véhicule suivant l'une quelconque des revendications précédentes **caractérisé en ce que** le hayon porte une vitre (6) comportant un premier bord sensiblement parallèle et à proximité du premier bord du hayon et un deuxième bord sensiblement parallèle et opposé audit premier bord, la vitre étant articulée sur le hayon au voisinage de son deuxième bord de sorte qu'en position rangée du toit la vitre peut être rabattue vers un élément du véhicule tel qu'une tablette arrière.

7. Véhicule selon la revendication 6, **caractérisé en ce que** le hayon possède une traverse disposée à sa partie haute, ladite traverse étant conformée en déflecteur ou aileron de sorte à améliorer l'écoulement d'air lorsque le véhicule est en configuration découverte.

8. Véhicule suivant l'une quelconque des revendications précédentes **caractérisée en ce qu'**une partie de l'articulation libérable est intégrée et/ou formée avec l'élément de structure.

9. Véhicule suivant la revendication 8 **caractérisé en ce que** la partie de l'articulation libérable intégrée et/ou formée avec l'élément de structure est un élément d'appui et de guidage de l'articulation libérable.

10. Véhicule suivant l'une des revendications 8 ou 9 **caractérisé en ce que** l'articulation libérable comprend un dispositif de verrouillage (27), tel qu'un crochet, disposé à l'intérieur de l'élément de structure.

11. Véhicule suivant l'une quelconque des revendications précédentes **caractérisé en ce que** l'élément de structure est réalisé sous forme d'arceau de sécurité.

12. Véhicule suivant l'une quelconque des revendications précédentes **caractérisé en ce que** l'élément de toit avant est fixé de façon articulée à l'élément de toit arrière suivant un premier axe, l'élément arrière étant fixé de façon articulée à la carrosserie suivant un deuxième axe (16) proche du bord arrière inférieur de cet élément arrière, un bras (17) étant articulé à l'élément avant suivant un troisième axe (18) situé en avant du premier axe, le bras étant articulé à la carrosserie suivant un quatrième axe (19) situé en avant du deuxième axe, les quatre axes précités définissant un quadrilatère déformable.

13. Véhicule suivant la revendication 12 **caractérisé en ce que** l'élément de toit arrière comprend un panneau central bordé de part et d'autre d'éléments latéraux portant le premier et le deuxième axe, le panneau central étant déplaçable en rotation autour d'un axe (15) avec le toit entre la position déployée et la position rangée, position dans laquelle des moyens de pivotement placent, lors du mouvement de rangement du toit, le panneau central juste en dessous de l'élément de toit avant.

## Claims

1. A vehicle with a convertible roof and a tailgate, the roof including at least a rigid front roof element (13) and a rigid rear roof element (14), such front and rear elements being movable between an unfolded position in which such element extend above the passenger compartment of the vehicle to form a roof having a front edge and a rear edge, and a folded position in which such elements are folded in a rear storage space in the vehicle, the tailgate (5) including a first edge (9) substantially parallel and close to the rear edge of the roof and a second edge (11) substantially parallel to and opposite said first edge, **characterized in that** the vehicle includes a structure element (23) having a general U-shape, the branches of which are fixedly integrated in the structure frame of the body, and placed between the rear edge of the roof and the first edge of the tailgate, the first edge and the second edge of the tailgate being detachably jointed to the structure element (23) and a rear part of the structure frame of the vehicle, respectively, so that the tailgate can open from the front rearwards by pivoting about the second edge for storing the roof and from the rear frontwards about the first edge for accessing the rear storage space.

2. A vehicle according to claim 1, **characterized in that** the rear roof element is jointed to the structure frame in the vicinity of the structure element.

3. A vehicle according to any one of the preceding claims, **characterized in that** the rear roof element and the tailgate rest, in the unfolded position of the roof and closed position of the tailgate, on the structure element.

4. A vehicle according to any one of the preceding claims, **characterized in that** a sealing device is placed between the structure element and the rear roof element on the one hand, and between the structure element and the tailgate, on the other hand.

5. A vehicle according to claim 4, **characterized in that** the sealing device is composed of a first continuous joint (24) placed between the structure element and the rear roof element, and of a second continuous joint (25) placed between a structure element and the tailgate.

6. A vehicle according to any one of the preceding claims, **characterized in that** the tailgate is provided with a glass (6) including a first edge substantially parallel and close to a first edge of the tailgate, and a second edge substantially parallel to and opposite said first edge, the glass being jointed to the tailgate in the vicinity of the second edge thereof, so that in the stored position of the roof, the glass can be turned down towards an element of the vehicle such as a rear board.

7. A vehicle according to claim 6, **characterized in that** the tailgate has a crossmember positioned at the higher part thereof, said crossmember being formed as a deflector or a fin so as to improve the flow of air when the vehicle is in the open configuration.

8. A vehicle according to any one of the preceding claims **characterized in that** a part of the detachable joint is integrated in and/or formed with the structure element.

9. A vehicle according to claim 8, **characterized in that** the detachable joint integrated in and/or formed with the structure element is an element for supporting and guiding the detachable joint.

10. A vehicle according to one of claims 8 or 9, **characterised in that** the detachable joint includes a locking device (27) such as a hook positioned inside the structure element.

11. A vehicle according to any one of the preceding claims, **characterized in that** the structure element is made in the form of a roll bar.

12. A vehicle according to any one of the preceding claims, **characterised in that** the front roof element is jointedly attached to the rear roof element along a first axis, with the rear element being jointedly attached to the body along a second axis (16) close to the lower rear edge of said rear element, an arm (17) being jointed to the front element along a third axis (18) located in front of the first axis, the arm being jointed to the body along a fourth axis (19) located in front of the second axis, the four above mentioned axes defining a deformable quadrilateral.

13. A vehicle according to claim 12, **characterised in that** the rear roof element includes a central panel framed on either side by lateral elements supporting the first and the second axes, with the central panel being movable in rotation about one axis (15) with the roof between the unfolded position and the stored position, a position in which pivoting means place the central panel just under the front roof element upon the roof storing motion.

## Patentansprüche

1. Fahrzeug mit versenkbarem Dach und mit Heckklappe, wobei das Dach wenigstens ein vorderes steifes Dachelement (13) und ein hinteres steifes Dachelement (14) umfasst, wobei diese vorderen und hinteren Elemente zwischen einer ausgefahrenen Position, in der sich diese Elemente oberhalb der Kabine des Fahrzeugs erstrecken, um ein Dach zu bilden, das einen vorderen Rand und einen hinteren Rand besitzt, und einer eingefahrenen Position verschiebbar sind, in der diese Elemente in einem hinteren Stauraum des Fahrzeugs zusammengefaltet sind, wobei die Heckklappe (5) einen zum hinteren Rand des Daches deutlich parallelen und in der Nähe zum hinteren Rand des Daches ersten Rand (9) und einen deutlich parallelen und zu dem genannten Rand entgegen gesetzten zweiten Rand (11) umfasst, **dadurch gekennzeichnet, dass** das Fahrzeug ein Strukturelement (23) umfasst, das eine allgemeine U-Form besitzt, dessen Füße fest in das Strukturelement des Fahrzeugs integriert sind und das zwischen dem hinteren Rand des Daches und dem ersten Rand der Heckklappe angeordnet ist, wobei der erste Rand und der zweite Rand der Heckklappe jeweils derart freigebbar an dem Strukturelement (23) und an einem hinteren Teil des Strukturelements des Fahrzeugs artikuliert sind, dass die Heckklappe zum Verstauen des Daches von vorne nach hinten geöffnet werden kann, indem sie um den zweiten Rand schwenkt, und von hinten nach vorn um den ersten Rand, um zum hinteren Stauraum zu gelangen.

2. Fahrzeug gemäß Anspruch 1, **dadurch gekennzeichnet, dass** das hintere Dachelement auf dem Strukturelement in der Nähe des Strukturorgans artikuliert ist.

3. Fahrzeug gemäß einem der vorherigen Ansprüche, **dadurch gekennzeichnet, dass** das hintere Dachelement und die Heckklappe sich in der ausgefahrenen Position des Daches und in der geschlossenen Position der Heckklappe auf das Strukturelement stützen.

4. Fahrzeug gemäß einem der vorherigen Ansprüche, **dadurch gekennzeichnet, dass** eine Abdichtvorrichtung zwischen dem Strukturorgan und dem hinteren Dachelement einerseits und zwischen dem Strukturorgan und der Heckklappe andererseits angeordnet ist.

5. Fahrzeug gemäß Anspruch 4, **dadurch gekennzeichnet, dass** die Abdichtvorrichtung aus einer ersten kontinuierlichen Abdichtung (24) gebildet wird, die zwischen dem Strukturorgan und dem hinteren Dachelement gebildet ist und einer zweiten kontinuierlichen Abdichtung (25), die zwischen einem Strukturorgan und der Heckklappe angeordnet ist.

6. Fahrzeug gemäß einem der vorherigen Ansprüche, **dadurch gekennzeichnet, dass** die Heckklappe eine Scheibe (6) mit einem ersten, deutlich parallelen Rand und in der Nähe des ersten Randes der Heckklappe und einem zweiten deutlich parallelen Rand und gegenüber dem ersten Rand trägt, wobei die Scheibe auf der Heckklappe in der Nähe ihres zweiten Randes derart artikuliert ist, dass die Scheibe in der eingefahrenen Position des Daches zu einem Element des Fahrzeugs, wie z. B. einer hinteren Ablage, umklappbar sein kann.

7. Fahrzeug gemäß Anspruch 6, **dadurch gekennzeichnet, dass** die Heckklappe eine an ihrem oberen Teil angeordnete Traverse besitzt, wobei die genannte Traverse als Abweiser oder Querruder derart angepasst ist, dass das Abfließen der Luft verbessert wird, wenn das Fahrzeug sich in der abgedeckten Konfiguration befindet.

8. Fahrzeug gemäß einem der vorherigen Ansprüche, **dadurch gekennzeichnet, dass** ein Teil der freigebbaren Artikulation in das Strukturorgan integriert und / oder damit geformt ist.

9. Fahrzeug gemäß Anspruch 8, **dadurch gekennzeichnet, dass** der Teil der freigebbaren Artikulation, der in das Strukturorgan integriert und / oder mit dem Strukturorgan geformt ist, ein Stütz- und Führungselement der freigebbaren Artikulation ist.

10. Fahrzeug gemäß Anspruch 8 oder 9, **dadurch gekennzeichnet, dass** die freigebbare Artikulation eine Verriegelungsvorrichtung (27) umfasst, wie z. B. einen im Innern des Strukturelements angeordneten Haken.

11. Fahrzeug gemäß einem der vorherigen Ansprüche, **dadurch gekennzeichnet, dass** das Strukturelement in Form eines kleinen Sicherheitsbogens realisiert ist.

12. Fahrzeug gemäß einem der vorherigen Ansprüche, **dadurch gekennzeichnet, dass** das vordere Dachelement artikuliert am hinteren Dachelement gemäß einer ersten Achse befestigt ist, wobei das hintere Element artikuliert an der Karosserie gemäß einer zweiten Achse (16) in der Nähe des hinteren unteren Randes dieses hinteren Elements (17) ist, wobei ein Arm (17) am vorderen Element gemäß einer dritten Achse (18) artikuliert ist, die sich vor der ersten Achse befindet, wobei der Arm an der Karosserie gemäß einer vierten Achse (19) artikuliert ist, die sich vor der zweiten Achse befindet, wobei die vorgenannten vier Achsen ein verformbares unregelmäßiges Viereck definieren.

13. Fahrzeug gemäß Anspruch 12, **dadurch gekennzeichnet, dass** das hintere Dachelement eine zentrale Platte umfasst, die auf jeder Seite mit lateralen Elementen gesäumt ist, die die erste und die zweite Achse tragen, wobei die zentrale Platte in Rotation um die Achse (15) mit dem Dach zwischen der ausgefahrenen Position und der eingefahrenen Position verschiebbar ist, eine Position, in der Schwenkmittel bei der Einfahrbewegung des Dachs die zentrale Platte genau unterhalb das vordere Dachelement platzieren.
